# EUROPEAN PATENT APPLICATION

(11) **EP 1 775 186 A1**
(43) Date of publication of application: **18.04.2007**
(21) Application number: 05109580.0
(22) Date of filing: 14.10.2005
(51) Int. Cl.: B60S 5/02, F21S 8/00, B67D 5/66

(54) **Lighting for fuel dispensing unit**

(71) Applicant: Dresser Wayne Aktiebolag, 200 61 Malmö (SE)
(72) Inventor: Larsson, Bengt I, 274 53 Skivarp (SE)
(74) Representative: Stenbäck, Maria Elisabeth

(57) **Abstract**

A fuel dispensing unit (1) for refuelling vehicles, comprising an upper lighting part (6) and a lower fuel handling part (2). The upper lighting part (6) has at least one translucent side or top member (9; 10; 11; 12; 13), allowing light from a light source (7) in the lighting part (6) to be emitted sideways or upwards.

## Description

### Technical Field of the Invention

The present invention relates to a fuel dispensing unit for refuelling vehicles, comprising an upper lighting part and a lower fuel handling part.

### Background Art

It is often desirable in the art to light up a fuel dispensing unit as well as the area surrounding the unit. This is particularly preferred during the hours of darkness, so that a person using the fuel dispensing unit can recognize unit handling means such as hose, pump nozzle, octane selector, unit display etc. A fuel dispensing unit may be fitted with a payment terminal which must be lightened up in order to facilitate user interaction. It is also desirable to light up a vehicle that is to be refuelled including the ground surrounding the vehicle. Other equipment common at a filling stations, such as trash cans, paper holders and buckets with windscreen scrapers etc, must be clearly visible. The light itself is also used as a means to attract customers, expose trademarks, provide safety and give a welcoming feeling in the hours of gloom or darkness.

Several techniques for lighting up fuel dispensing units are known in the art. For example JP-09-328200 discloses a fuel dispensing unit comprising an upper housing which consists of an upper housing body and an underside case incorporating a translucent panel faced down towards a lower housing. In the upper housing a fluorescent lamp is installed, shining down through the translucent panel towards the lower housing of the fuel dispensing unit.

An inconvenience of the above-mentioned is that the illuminated area is very small and fails to provide efficient lighting, particularly in the area surrounding the fuel dispensing unit. To achieve sufficient light extra lamp-posts are often in the filling station area, and lamps must be placed in a weather-protection roof which frequently covers the fuel dispensing unit. Trademarks positioned on the unit are hard to see from a distance, and means such as advertising pillars on and around the filling station are used to overcome this drawback.

It is thus desirable in the art to have a fuel dispensing unit that is more visible in the dark, including the area and equipment surrounding the unit. It is also desirable for trademarks and logos arranged on the unit to be more distinctly visible.

### Summary of the Invention

In view of the foregoing, it is an object of the present invention to provide a fuel dispensing unit that better illuminates itself and its surroundings, and more distinct displays trademarks.

This and other objects and advantages that will be apparent from the following description of the present invention are achieved by a fuel dispensing unit having the features stated in the appended claim 1. Preferred embodiments are defined in the dependent claims.

The inventive fuel dispensing unit is most advantageous by a significantly improved ability to light up itself and its surroundings and display trademarks and other logos. This is achieved by including in the fuel dispensing unit an upper lighting part that has a translucent top member allowing light from a light source in the lighting part to be emitted upward. The upwardly directed light shines on the surroundings, for example a weather-protection roof covering the unit area. This has also the effect that the light shining on, for example, the underside of a roof is reflected on the ground, giving a highly increased illumination. Hence it is a positive effect that the number of lamp-posts in the station area, and/or the number of lamps normally used in a roof, can be reduced and sometimes such lamp-posts and lamps can even be omitted. This can be done since the light from the fuel dispensing unit functions as a replacement. Since in many cases the light source in the upper lighting part is positioned at a much lower level than light sources in lamp-posts or in a weather-protection roof, broken lamps can be replaced faster and more safely.

By arranging one or more translucent side members in the upper lighting part light shines sideways, from the light source in the lighting part to the surroundings. Furthermore any type of known light source may be used in the lighting part, such as a fluorescent tube, spotlight or traditional light bulb.

To achieve a better display of trademarks and other logos on the fuel dispensing unit a corresponding decal may be arranged on the translucent side member, thus creating clear and visible recognition. Any known type of translucent paintings, stickers or writings may be used as a decal.

Another object of the present invention is to provide a fuel dispensing unit creating a soft light, and by making the translucent member of a semi-translucent material, for example frosted glass or plastics, this object is achieved.

Still another objective of the invention is that it should be possible to fit existing fuel dispensing units with a lighting part. This is done by making the translucent members in the form of panels that are easily mounted and attached. In the case where an existing unit has, for example, a light source comprising an upper panel structure of aluminium with downwardly directed light, the aluminium panels can easily be replaced by translucent panels having the same shape and size as the aluminium panels.

Another object is to provide a fuel dispensing unit with a lighting part where the translucent members easily can be changed in case of breakage or if the members are to have another colour or decal. It is thus preferred to mount the translucent members with conventional machine screws.

A further object is to provide a safe fuel dispensing unit fitted with a lighting part as stated above. Highly flammable fuel vapours might escape from the pump nozzle and these vapours must on no conditions reach any electrics. This problem is solved by keeping electrics in the lighting part at a safe distance from relevant fuel handling means. All fuel handling means are arranged in a lower fuel handling part of the fuel dispensing unit, and it is preferred to have a distance of minimum 5 cm between the fuel handling means and the lighting part. It is also possible to encapsulate the electric equipment in the lighting part to prevent fuel vapour from entering the electrics. By doing this it is not necessary to have the above-mentioned arrangement providing a safety distance between the fuel handling means and the lighting part.

Encapsulating lighting electrics is however costly, and an additional object of the present invention is to provide a fuel dispensing unit with a structure that meets the conditions providing a safety distance that makes said encapsulation unnecessary. Hence a preferred fuel dispensing unit has a fuel handling part comprising a column for a fuel pump unit, said column having an upper lighting part, a rear part, a front part and two sides extending between the rear part and the front part, wherein a hose is attached to the column at a location below the upper lighting part, which hose at least partly is stored in the column in a rest position of the hose. This arrangement separates the fuel dispensing means from the lighting electrics, thus very effectively meeting the safety requirements described above.

Still an additional object of the present invention is to provide a fuel dispensing unit with a lighting part that is of simple construction, that achieves the stated objects in a simple, effective and inexpensive manner, that solves the prior art problems and that satisfies the need existing in the art.

### Brief Description of the Drawings

The invention will now be described in more detail with reference to the accompanying schematic drawing, which shows an example of a presently preferred embodiment of the invention.

Fig. 1 is a front view of a fuel dispensing unit having a lighting part according to the invention.

Fig. 2 is a side view of a fuel dispensing unit having a lighting part according to the invention.

### Detailed Description of Preferred Embodiments of the Invention

The fuel dispensing unit of the present invention is designated 1 in the accompanying drawing. The lower fuel handling part 2 comprises fuel handling means such as a pump, flow meter etc. On both sides of the fuel handling part 2 columns 3, 4 are arranged to provide hose and pump nozzle handling and storage means. Between the columns 3, 4 there is a pump display 5 which may also include a payment terminal. Mounted on top of the columns 3, 4 is an upper lighting part 6 with an internal fluorescent lamp 7 as a light source.

The lighting part 6 comprises a translucent bottom member 8, a translucent top member 9, translucent front and rear members 10, 11 and translucent side members 12, 13.

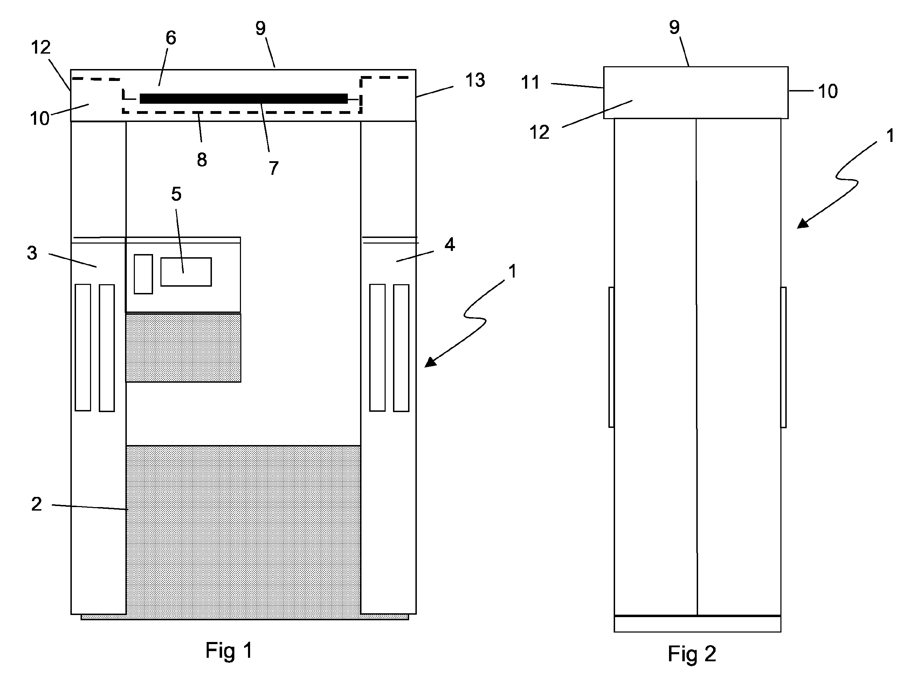

The bottom member 8, which is indicated by a dashed line in Fig. 1, is made in the shape of a U with wings resting on top of the columns 3, 4. The lighting electrics including the fluorescent lamp 7 are mounted on the bottom member 8, and an electric connection is made between the column 3 and the lighting part 6 for feeding electric current to the lamp 7. The translucent top, front, rear and side members 9-13 are made in the form of flat panels.

The translucent members 8-13 are fixed to the columns 3, 4 and to each other by conventional machine screws, thus making a quick change of panels possible. Between the members 8-13 a seal is arranged to prevent water from entering the interiors of the lighting part 6.

When the light source 7 is activated, light will be emitted from the same through the translucent members 9-13, and will, compared with prior art, hence provide much better illumination of the fuel dispensing unit 1 and its surroundings. Since it is very common to place the unit 1 under a weather-protection roof, the translucent top member 9 also has the effect that light emitted upwards will be reflected back from the roof, down towards the unit 1 and its surroundings. The light is typically activated in the hours of gloom or darkness, and by using conventional time activation it is possible to save energy in daylight.

Preferably the translucent members 9-13 are semi-translucent and made of frosted plastics. This creates a softer light and gives members 9-13 that have a low weight, are inexpensive and easy to mount. Preferably the frosted plastic is of a kind that in case of breakage has no sharp edges. The front, rear and side members 10-13 are fitted with decals depicting an optional logo or trademark.

The skilled person realises that a number of modifications of the embodiments described herein are conceivable without departing from the scope of the invention, which is defined in the appended claims. For instance the light source may be a spotlight or a light bulb, and the translucent members may be painted, fitted with a sticker, coloured and of another geometric shape, as for example circular, elliptic, triangular, star-shaped etc. It is also possible to mount the lighting part of the present invention on fuel disposing units with only one column as well as on units with a more traditional box-shape.

In one embodiment of present invention, lighting electrics are encapsulated making it possible to mount the lighting part closer to the fuel handling members.

In another embodiment the light is activated by a light sensor and in yet another the light is manually activated. The light may also be reflected and/or focused by reflectors arranged inside the lighting part.

## Claims

1. A fuel dispensing unit (1) for refuelling vehicles, comprising an upper lighting part (6) and a lower fuel handling part (2), **characterised in that** the upper lighting part (6) has at least one translucent side or top member (9; 10; 11; 12; 13), allowing light from a light source (7) in the lighting part (6) to be emitted sideways or upwards.

2. A fuel dispensing unit (1) according to claim 1, wherein the translucent member (9; 10; 11; 12; 13) is semi-translucent.

3. A fuel dispensing unit (1) according to claim 1 or 2, wherein the translucent member (9; 10; 11; 12; 13) is fitted with a decal.

4. A fuel dispensing unit (1) according to any one of claims 1-3, wherein the translucent member (9; 10; 11; 12; 13) has the form of a flat panel.

5. A fuel dispensing unit (1) according to any one of claims 1-4, wherein the light source (7) in the lighting part (6) is a fluorescent tube, spotlight or light bulb.

6. A fuel dispensing unit (1) according to any one of claims 1-5, wherein the side or top member (9; 10; 11; 12; 13) is attached to the lighting part (6) by conventional and dismountable means of attachment.

7. A fuel dispensing unit (1) according to any one of claims 1-6, wherein all fuel dispensing means in the fuel dispensing unit (1) are arranged in the lower fuel handling part (2).

8. A fuel dispensing unit (1) according to any one of claims 1-7, wherein the lighting part (6) is spaced apart from the fuel handling part (2) by a distance of at least 5 cm.

9. A fuel dispensing unit (1) according to any one of claims 1-8, wherein electric equipment in the lighting part (6) is encapsulated, preventing fuel vapour from entering the electric equipment.

10. A fuel dispensing unit (1) according to one any of claims 1-9, wherein the lower fuel handling part (2) comprises at least one column (3; 4).

11. A fuel dispensing unit (1) according to one any of claims 1-10, wherein the upper lightning part (6) has at least one translucent bottom member (8) allowing light from a light source (7) in the lighting part (6) to be emitted downwards.
